# EUROPÄISCHE PATENTSCHRIFT

(11) **EP 2 748 036 B1**
(45) Veröffentlichungstag und Bekanntmachung des Hinweises auf die Patenterteilung: **16.11.2016**
(21) Anmeldenummer: 12737220.9
(22) Anmeldetag: 19.07.2012
(51) Int. Cl.: B60R 11/04

(54) **SCHWENKMECHANISMUS ZUM BEWEGLICHEN ANBRINGEN EINER KAMERA AN EINEM FAHRZEUG**
SWINGING MECHANISM FOR MOVABLY ATTACHING A CAMERA ON A VEHICLE
MÉCANISME DE PIVOTEMENT POUR LA FIXATION MOBILE D'UN CAMERA SUR UN VÉHICULE

(30) Priorität: 27.08.2011 DE 102011111854
(43) Veröffentlichungstag der Anmeldung: 02.07.2014
(60) Teilanmeldung: 14191065.3
(73) Patentinhaber: Volkswagen Aktiengesellschaft, 38440 Wolfsburg (DE)
(72) Erfinder: HANSEN, Ralf, 38165 Lehre (DE)
(86) Internationale Anmeldenummer: PCT/EP2012/003046
(87) Internationale Veröffentlichungsnummer: WO 2013/029718

(56) Entgegenhaltungen:
- WO-A1-2011/086132
- DE-A1-102006 023 103
- DE-A1-102009 008 281

## Beschreibung

Die vorliegende Erfindung betrifft einen Schwenkmechanismus zum beweglichen Anbringen einer Kamera an einem Fahrzeug, insbesondere zum Anbringen einer so genannten Rückfahrkamera, welche zum Erfassen eines Außenbereichs hinter dem Fahrzeug ausgestaltet ist.

Um einem Fahrer eines Fahrzeugs, beispielsweise eines Personenkraftwagens oder eines Lastkraftwagens, das Rückwärtsfahren zu erleichtern, beispielsweise beim Einparken, werden so genannte Rückfahrkameras vorgesehen, welche in der Lage sind, einen rückwärtigen Außenbereich des Fahrzeugs zu erfassen und beispielsweise auf einer Anzeigeeinrichtung in einem Armaturenbrett des Fahrzeugs darzustellen. Beispielsweise kann eine Kamera an einer Rückseite des Fahrzeugs derart angebracht werden, dass sie in der Lage ist, einen Bereich hinter dem Fahrzeug einschließlich zumindest eines Teils einer hinteren Stoßstange des Fahrzeugs aufzunehmen. Zum Schutz der Kamera kann es vorgesehen sein, dass die Kamera in einer Öffnung der Karosserie versenkbar angeordnet ist. Ein besonders unauffälliges Erscheinungsbild ergibt sich, wenn die Kamera beispielsweise in einer Öffnung der Karosserie versenkbar angeordnet ist, in welcher zusätzlich ein Bedienelement, beispielsweise einen Handgriff, zum Öffnen einer Heckklappe oder eines Kofferraumdeckels des Fahrzeugs angeordnet ist.

In diesem Zusammenhang ist aus der EP 2 054 572 B1 eine Vorrichtung zum Öffnen eines Fahrzeugschlosses und zur Bilderfassung im Außenbereich vom Fahrzeug offenbart. Die Vorrichtung umfasst einen schalenförmigen Träger, welcher sich in einem Durchbruch einer Außenverkleidung der Karosserie befindet, eine Handhabe, welche in der Trägerschale klappbeweglich gelagert und zwischen zwei Klapplagen überführbar ist, und eine zur Bilderfassung dienende Kamera. Die Handhabe ist zwischen einer Zuklapplage, in welcher die unbetätigte Handhabe die Schalenöffnung der Trägerschale verschließt und das Schloss unbetätigt lässt, und einer Aufklapplage, in welcher die betätigte Handhabe aus der Trägerschale heraus und/oder in die Trägerschale hinein manuell klappbewegt ist und das Schloss betätigt, überführbar. Die Kamera sitzt an einer Rückwand der Trägerschale. Die Rückwand der Trägerschale weist ein Loch auf, hinter welchem das Gehäuse eines Modulgehäuses befestigt ist, in welchem ein Kamerahalter für die Kamera sowohl schwenkbar gelagert als auch translatorisch geführt ist, um die Kamera zwischen zwei Stellungen zu verschwenken, nämlich einerseits einer Einfahrstellung und andererseits einer Ausfahrstellung. Am Modulgehäuse sind sowohl ein Antrieb als auch ein Getriebe zur rotatorischtranslatorischen Bewegung des Kamerahalters angeordnet. Insbesondere aufgrund der translatorischen Bewegung ist jedoch ein verhältnismäßig starker Elektromotor als Antrieb erforderlich, wodurch die Vorrichtung verhältnismäßig teuer werden kann.

Weiterhin wird in der WO 2011/086132 A1 eine vereinfachte Vorrichtung einer Kameraeinheit eines Kraftfahrzeugs offenbart. Die Vorrichtung umfasst eine Kameraeinheit, die in eine Ruheposition und in eine aktive Position bringbar ist, und ein Schutzelement, das in eine Schließ-Stellung und in eine Offen-Stellung führbar ist. In der Schließ-Stellung des Schutzelements befindet sich die Kameraeinheit in ihrer Ruheposition von außen unzugänglich hinter dem Schutzelement und in der Offen-Stellung des Schutzelements befindet sich die Kameraeinheit in der aktiven Position zur Bilderfassung. Die Vorrichtung umfasst ferner eine Antriebseinheit zur Bewegung der Kameraeinheit und des Schutzelements. Die Kameraeinheit und das Schutzelement sind beweglich aneinander angelenkt. Gemäß einer Ausführungsform ist vorgesehen, dass das Schutzelement um eine erste Achse drehbar und/oder schwenkbar angeordnet und dass die Kameraeinheit um eine zweite Achse drehbar gelagert ist. Die erste und die zweite Achse sind vorzugsweise fest, d.h. unbeweglich, in oder an der Vorrichtung angeordnet. Die bewegliche Anlenkung bzw. Verbindung der Kameraeinheit an dem Schutzelement ermöglicht, dass sowohl die Kameraeinheit als auch das Schutzelement um jeweils eine feststehende Achse gedreht bzw. geschwenkt werden können. Hierdurch kann die Kameraeinheit dem Schutzelement folgen, wenn diese um die erste Achse geschwenkt wird. Umgekehrt kann das Schutzelement der Kameraeinheit folgen, wenn diese durch die Antriebseinheit um die zweite Achse geschwenkt wird.

Aufgabe der vorliegenden Erfindung ist es daher, eine verbesserte Anbringung für eine Kamera, insbesondere eine Rückfahrkamera, bereitzustellen.

Gemäß der vorliegenden Erfindung wird diese Aufgabe durch eine Bedienvorrichtung nach Anspruch 1 und ein Fahrzeug nach Anspruch 7 gelöst. Die abhängigen Ansprüche definieren bevorzugte und vorteilhafte Ausführungsformen der Erfindung.

Im Rahmen der vorliegenden Erfindung wird ein Schwenkmechanismus zum beweglichen Anbringen einer Kamera an einem Fahrzeug verwendet. Der Schwenkmechanismus umfasst eine fahrzeugseitige Komponente, einen Kamerahalter, einen ersten Schwenkarm, einen zweiten Schwenkarm, ein erstes Drehgelenk, ein zweites Drehgelenk, ein drittes Drehgelenk und ein viertes Drehgelenk. Die fahrzeugseitige

Komponente ist an dem Fahrzeug anbringbar. Das erste Drehgelenk ist an der fahrzeugseitigen Komponente angebracht und das zweite Drehgelenk ist in einem ersten Abstand zu dem ersten Drehgelenk an der fahrzeugseitigen Komponente angebracht. Das dritte Drehgelenk ist an dem Kamerahalter angebracht und das vierte Drehgelenk ist in einem zweiten Abstand zu dem dritten Drehgelenk an dem Kamerahalter angebracht. Der erste Schwenkarm umfasst ein erstes Ende, ein zweites Ende und eine erste Länge. Das erste Ende ist an dem ersten Drehgelenk drehbar gelagert und das zweite Ende ist an dem dritten Drehgelenk drehbar gelagert. Der zweite Schwenkarm umfasst ein erstes Ende, ein zweites Ende und eine zweite Länge. Das erste Ende ist an dem zweiten Drehgelenk drehbar gelagert und das zweite Ende ist an dem vierten Drehgelenk drehbar gelagert. Somit bildet der Schwenkmechanismus ein Viergelenklager oder Viergelenkscharnier, wodurch der Kamerahalter beispielsweise von einer ersten versenkten Position in einen zweite ausgefahrene Position zusammen mit einer darauf montierten Kamera bewegt werden kann. Da zur Bewegung des Kamerahalters nur Drehbewegungen an den Drehgelenken erforderlich sind und keine translatorischen Bewegungen auf beispielsweise Führungsschienen oder in Führungsnuten benötigt werden, ist eine Betätigung des Schwenkmechanismus mit verhältnismäßig geringem Kraftaufwand möglich. Dadurch kann ein kleiner und kostengünstiger Antrieb zum Bewegen der Kamera eingesetzt werden.

Gemäß einer Ausführungsform ist der erste Abstand zwischen dem ersten und zweiten Drehgelenk und der zweite Abstand zwischen dem dritten und vierten Drehgelenk unterschiedlich. Alternativ oder zusätzlich können die erste Länge des ersten Schwenkarms und die zweite Länge des zweiten Schwenkarms unterschiedlich sein. Durch eine derartige asymmetrische Ausgestaltung des Schwenkmechanismus kann eine Bewegungsbahn des Kamerahalters und der darauf angebrachten Kamera wie benötigt eingerichtet werden, beispielsweise kann eine Bewegungsbahn erreicht werden, bei welcher die Kamera durch eine Öffnung in einer Karosserie des Fahrzeugs zumindest teilweise hindurchbewegt wird und zusätzlich geschwenkt wird, um geeignet zu dem gewünschten Erfassungsbereich ausgerichtet zu werden.

Gemäß einer weiteren Ausführungsform sind der erste Abstand, der zweite Abstand, die erste Länge und die zweite Länge derart dimensioniert, dass der Kamerahalter zwischen einer ersten Position und einer zweiten Position bezogen auf die fahrzeugseitige Komponente beweglich ist. Ferner sind der erste und zweite Abstand sowie die erste und zweite Länge derart dimensioniert, dass sich zumindest ein Bereich des Kamerahalters bei einer Bewegung des Kamerahalters zwischen der ersten Position und der zweiten Position bezogen auf die fahrzeugseitige Komponente entlang einer S-förmigen Bewegungsbahn bewegt. Durch die S-förmige Bewegungsbahn kann beispielsweise erreicht werden, dass die auf dem Kamerahalter montierte Kamera in der ersten Position innerhalb des Fahrzeugs in einer platzsparenden Ausrichtung gehalten wird, um dann entlang der S-förmigen Bewegungsbahn durch eine Öffnung in der Karosserie des Fahrzeugs zumindest teilweise nach außen geschwenkt zu werden und abschließend derart ausgerichtet wird, dass die Kamera in der Lage ist, den gewünschten Erfassungsbereich aufzunehmen. Mit anderen Worten führt der Schwenkmechanismus zwei rotatorische Bewegungen aus, wobei ein Richtungswechsel von der ersten rotatorischen Bewegung zur zweiten rotatorischen Bewegung stattfindet.

Gemäß einer weiteren Ausführungsform umfasst der Schwenkmechanismus eine Antriebseinheit, beispielsweise einen Elektromotor mit einem Getriebe, welcher ausgestaltet ist, den Kamerahalter zwischen der ersten und der zweiten Position zu bewegen. Die Antriebseinheit kann beispielsweise an einem der vier Drehgelenke angreifen und durch eine Drehbewegung den Schwenkmechanismus betätigen. Da der Schwenkmechanismus ohne translatorische Bewegungen auskommt, kann ein einfaches Getriebe verwendet werden, welches lediglich eine Morrientenübersetzung bereitstellt. Eine Umsetzung einer Drehbewegung des Elektromotors in eine translatorische Bewegung ist hingegen nicht erforderlich, so dass die Antriebseinheit kostengünstig, kompakt und leicht ausgebildet werden kann.

Im Rahmen der vorliegenden Erfindung wird weiterhin ein Kameramodul für ein Fahrzeug verwendet. Das Kameramodul umfasst den zuvor beschriebenen Schwenkmechanismus und eine Kamera, welche an dem Kamerahalter des Schwenkmechanismus angebracht ist. Mithilfe des zuvor beschriebenen Viergelenkscharniers kann die Kamera platzsparend in dem Kameramodul untergebracht werden und darüber hinaus platzsparend in die zweite Position bewegt werden, um auf einen vorbestimmten Aufnahmebereich ausgerichtet zu werden.

Gemäß einer Ausführungsform umfasst die fahrzeugseitige Komponente ein Gehäuse, beispielsweise ein Kameramodulgehäuse, mit einer Öffnung. Der erste Abstand, der zweite Abstand, die erste Länge und die zweite Länge des Schwenkmechanismus sind derart dimensioniert, dass die Kamera zwischen einer ersten Position und einer zweiten Position bezogen auf das Gehäuse beweglich ist. In der ersten Position ist die Kamera im Inneren des Gehäuses angeordnet und in der zweiten Position ragt die Kamera zumindest teilweise nach außen durch die Öffnung des Gehäuses hervor. In dem Gehäuse des Kameramoduls kann darüber hinaus die zuvor beschriebene Antriebseinheit untergebracht sein. Indem der Schwenkmechanismus, die Kamera und gegebenenfalls die Antriebseinheit in dem Gehäuse des Kameramoduls untergebracht sind und das Gehäuse gleichzeitig die fahrzeugseitige Komponente umfasst, an welcher das erste und zweite Drehgelenk angebracht sind, kann ein kompaktes Kameramodul bereitgestellt werden, welches an einer geeigneten Öffnung in der Karosserie an einer Innenseite der Karosserie als leicht austauschbare Moduleinheit angebracht werden kann.

Gemäß der vorliegenden Erfindung wird eine Bedienvorrichtung zum Öffnen eines Fahrzeugschlosses bereitgestellt. Die Bedienvorrichtung umfasst einen Bediengriff und das zuvor beschriebene Kameramodul. Der Bediengriff ist in einer Öffnung einer Außenhaut einer Fahrzeugkarosserie anbringbar und zum Öffnen des Fahrzeugschlosses aus einer Ruheposition in eine betätigte Position bewegbar. Der Bediengriff verschließt in der Ruheposition die Öffnung der Außenhaut im Wesentlichen und ragt in der betätigten Position zumindest teilweise von der Außenhaut hervor. Der Bediengriff kann beispielsweise eine klappenähnliche Form aufweisen und bei einer Betätigung zumindest teilweise von der Außenhaut nach außen hervorgeklappt werden. Das Kameramodul ist in einem Innenbereich des Fahrzeugs innerhalb der Außenhaut derart anbringbar, dass die Öffnung des Gehäuses des Kameramoduls und die Öffnung der Außenhaut einander derart gegenüberliegen, dass die Kamera in der zweiten Position zumindest teilweise durch die Öffnung des Gehäuses und durch die Öffnung der Außenhaut nach außen hervorragt. In der ersten Position ist die Kamera hingegen vollständig innerhalb des Gehäuses des Kameramoduls untergebracht, so dass der Bediengriff flach an oder in der Außenhaut liegen kann und somit die Öffnung in der Fahrzeugkarosserie verschließt. Gleichzeitig ist dadurch die Kamera nach außen hin geschützt. Gemäß einer Ausführungsform wird der Bediengriff zusammen mit der Bewegung der Kamera von der ersten Position in die zweite Position von der Ruheposition in die betätigte Position bewegt. Dadurch wird automatisch die Öffnung in der Außenhaut der Fahrzeugkarosserie freigegeben, so dass die Kamera derart durch die Öffnung in der Außenhaut geführt werden kann, dass der gewünschte Aufnahmebereich erfasst werden kann. Zusätzlich kann an der Öffnung des Gehäuses des Kameramoduls eine weitere Klappe, beispielsweise eine Schutzklappe mit einer Dichtung, vorgesehen sein, welche durch die Bewegung der Kamera von der ersten Position in der zweiten Position aufgeklappt wird. Diese zusätzliche Schutzklappe bietet einen Schutz der Kamera und des Kameramoduls, wenn der Bediengriff manuell betätigt wird und beispielsweise eine Hand eines Benutzers unter den Bediengriff in die Öffnung der Fahrzeugkarosserie eingreift.

Gemäß der vorliegenden Erfindung wird weiterhin ein Fahrzeug bereitgestellt, welches eine Karosserie und die zuvor beschriebene Bedienvorrichtung umfasst. In einer Außenhaut der Karosserie ist eine Öffnung vorgesehen und der Bediengriff der Bedienvorrichtung ist in der Öffnung der Außenhaut angebracht. Das Kameramodul der Bedienvorrichtung ist in dem Innenbereich des Fahrzeugs derart angebracht, dass die Öffnung des Gehäuses und die Öffnung der Außenhaut derart einander gegenüberliegen, dass die Kamera in der zweiten Position zumindest teilweise durch die Öffnung des Gehäuses und durch die Öffnung der Außenhaut nach außen hervorragt. Bei einem derartigen Fahrzeug kann die Kamera im Bedarfsfall, beispielsweise beim Einparken oder Rückwärtsfahren, ausgefahren werden und im unbenutzten Zustand im Inneren des Fahrzeugs geschützt aufbewahrt werden. Indem die Kamera als Teil der Bedienvorrichtung ausgebildet ist, ist eine unauffällige Anbringung der Kamera an dem Fahrzeug möglich.

Die Karosserie des Fahrzeugs kann beispielsweise eine Heckklappe oder einen Kofferraumdeckel des Fahrzeugs umfassen. Die Bedienvorrichtung kann in diesem Fall zum Öffnen eines Schlosses für die Heckklappe oder den Kofferraumdeckel dienen. Die Kamera ist in der ersten Position geschützt innerhalb der Heckklappe oder des Kofferraumdeckels untergebracht und in der zweiten Position ragt die Kamera aus der Bedienvorrichtung derart hervor, dass bei geschlossener Heckklappe oder geschlossenem Kofferraumdeckel ein Objektiv der Kamera einen rückwärtigen Bodenbereich hinter dem Fahrzeug aufnehmen kann. Derartige Bedienvorrichtungen mit integrierter Kamera können jedoch auch an anderen Stellen des Fahrzeugs eingesetzt werden, beispielsweise im Bereich der seitlichen Türen des Fahrzeugs, um beispielsweise einen Seitenabstand des Fahrzeugs zu einem Fahrbahnrand oder einer Fahrbahnmarkierung zu erfassen.

Die vorliegende Erfindung wird nachfolgend unter Bezugnahme auf die Zeichnungen im Detail beschrieben werden.
- Fig. 1: zeigt eine Bedienvorrichtung gemäß einer Ausführungsform der vorliegenden Erfindung in einer Heckklappe eines Fahrzeugs.
- Fig. 2-5: zeigen Momentaufnahmen eines Bewegungsverlaufs eines Schwenkmechanismus und einer Kamera der Bedienvorrichtung der Fig. 1.
- Fig. 6: zeigt ein Fahrzeug gemäß einer Ausführungsform der vorliegenden Erfindung von hinten.
- Fig. 7: zeigt ein Fahrzeug gemäß einer Ausführungsform der vorliegenden Erfindung von der Seite.

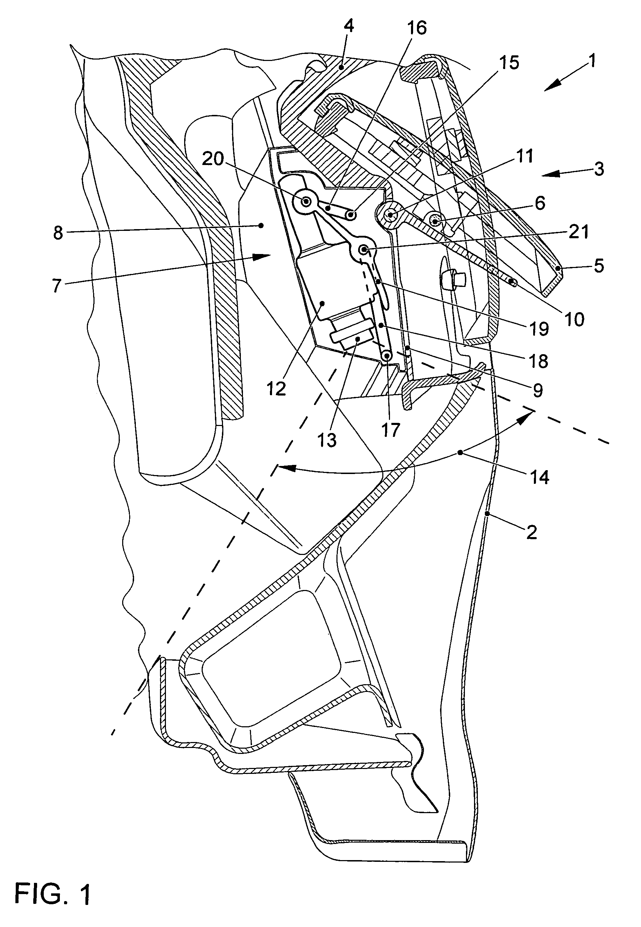

Fig. 1 zeigt einen Ausschnitt einer Heckklappe 1 eines Fahrzeugs mit einer Außenseite 2. Die Außenseite 2 bildet einen Teil der Karosserie des Fahrzeugs. In der Heckklappe 1 ist eine Öffnung vorgesehen, in welcher eine Bedienvorrichtung 3 zum Öffnen eines Fahrzeugschlosses (welches in der Fig. 1 nicht gezeigt ist) der Heckklappe 1. Die Bedienvorrichtung 3 umfasst ein Gehäuse 4, welches in die Öffnung der Heckklappe 1 eingesetzt ist. In dem Gehäuse 4 ist ein Bediengriff 5 um eine Schwenkachse 6 schwenkbar gelagert angeordnet. In einem unbetätigten Zustand des Bediengriffs 5 schließt der Bediengriff 5 im Wesentlichen bündig mit der Außenhaut 2 der Heckklappe 1 ab. In Fig. 1 ist ein betätigter Zustand des Bediengriffs 5 gezeigt, in welchem ein oberer Teil des Bediengriffs in das Gehäuse 4 der Bedienvorrichtung hineingeklappt ist und ein unterer Teil des Bediengriffs 5 von dem Gehäuse 4 und der Außenhaut 2 der Heckklappe 1 hervorragt. Die Bedienvorrichtung 3 umfasst weiterhin ein Kameramodul 7 mit einem Kameramodulgehäuse 8. Das Kameramodulgehäuse 8 weist eine Öffnung 9 auf, welche von einer Klappe 10, die um eine Achse 11 drehbar gelagert ist, verschließbar ist. In Fig. 1 ist die Klappe 10 in einem geöffneten Zustand gezeigt, so dass in Fig. 1 eine Verbindung vom Innenraum des Modulgehäuses 8 durch die Öffnung 10 und den nach außen vorstehenden Bediengriff 5 nach außerhalb des Fahrzeugs besteht. In dem Kameramodulgehäuse 8 befindet sich eine Kamera 12 mit einem Objektiv 13. Das Objektiv 13 weist einen Bilderfassungsbereich auf, welcher durch die gestrichelten Linien und den Winkelbogen 14 in Fig. 1 schematisch dargestellt ist.

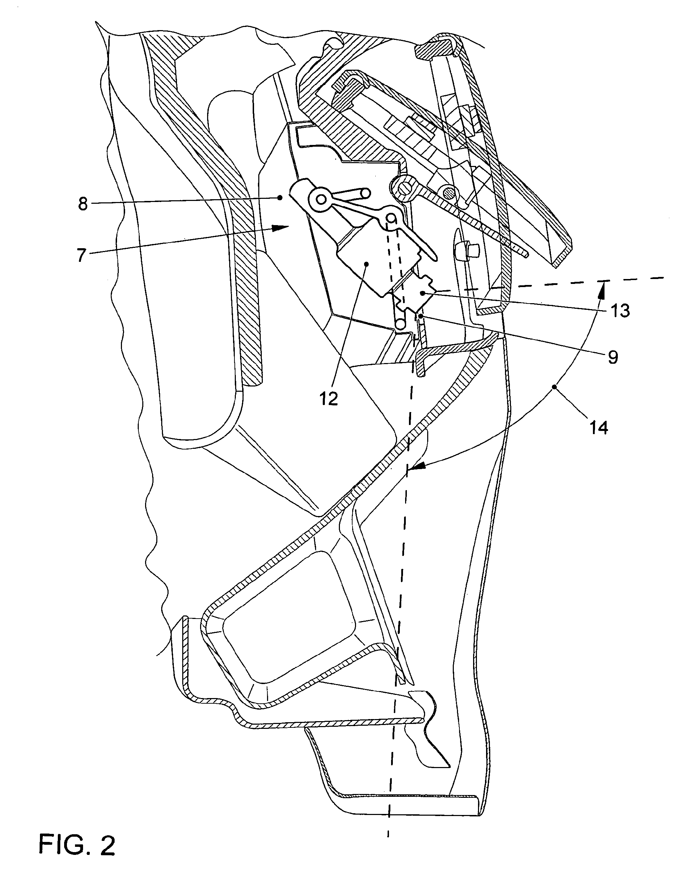

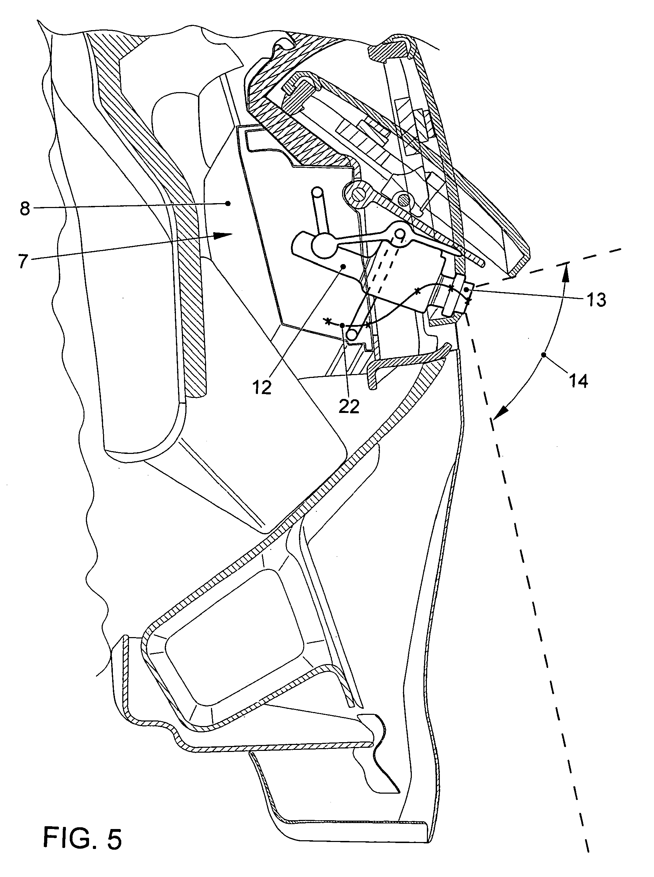

Die Kamera 12 ist über ein Viergelenkscharnier an dem Kameramodulgehäuse 8 beweglich angebracht. Das Viergelenkscharnier umfasst ein erstes Drehgelenk 15, welches an dem Kameramodulgehäuse 8 angebracht ist, einen ersten Schwenkarm 16, welcher mit einem ersten Ende an dem ersten Drehgelenk 15 drehbar gelagert ist, ein zweites Drehgelenk 17, welches in einem ersten Abstand zu dem ersten Drehgelenk 15 an dem Kameramodulgehäuse 8 angebracht ist, einen zweiten Schwenkarm 18, welcher mit einem ersten Ende an dem zweiten Drehgelenk 17 drehbar gelagert ist, einen Kamerahalter 19, an welchem die Kamera 12 angebracht ist, ein drittes Drehgelenk 20, welches an dem Kamerahalter 19 angebracht ist und an welchem ein zweites Ende des ersten Schwenkarms 16 drehbar gelagert ist, und ein viertes Drehgelenk 21, welches in einem zweiten Abstand zu dem dritten Drehgelenk 20 an dem Kamerahalter 19 angebracht ist und an welchem ein zweites Ende des zweiten Schwenkarms 18 drehbar gelagert ist. Der zweite Schwenkarm 18 wird in Fig. 1 teilweise von der Kamera 12 und dem Kamerahalter 19 verdeckt und ist daher in der Fig. 1 teilweise gestrichelt gezeichnet. Der erste Schwenkarm 16 weist eine erste Länge auf, welche unterschiedlich zu der Länge des zweiten Schwenkarms 18 ist. Ebenso sind der Abstand zwischen dem ersten Drehgelenk 15 und dem zweiten Drehgelenk 17 und der Abstand zwischen dem dritten Drehgelenk 20 und dem vierten Drehgelenk 21 unterschiedlich. Die Längen der Schwenkarme 16 und 18 und die Abstände zwischen den Drehgelenken sind derart gewählt, dass die Kamera 12 zwischen einer ersten Position und einer zweiten Position bewegt werden kann. In der ersten Position befindet sich die Kamera 12 in der in Fig. 1 gezeigten Position und in der zweiten Position befindet sich die Kamera 12 in der in Fig. 5 gezeigten Position. Momentaufnahme einer Bewegung der Kamera 12 zwischen der in Fig. 1 gezeigten Position und der in Fig. 5 gezeigten Position sind in den Figuren 2, 3 und 4 gezeigt. Gleiche Bezugszeichen bezeichnen in den Figuren 1-5 gleiche Komponenten.

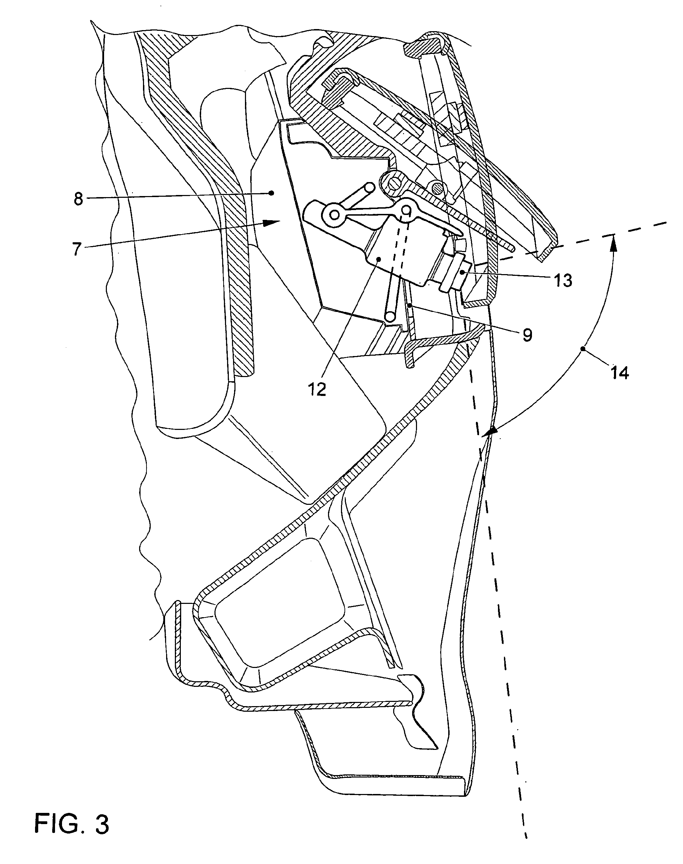

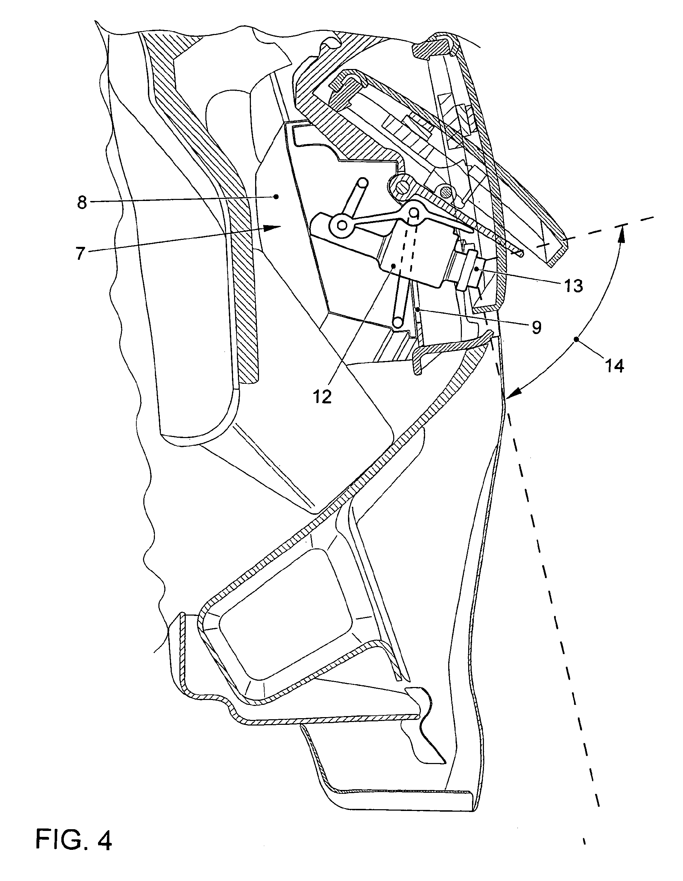

Die Bewegung der Kamera 12 von der ersten Position in die zweite Position wird nachfolgend im Detail beschrieben. In Fig. 1 ist die Kamera 12 vollständig und platzsparend (d.h. nahezu senkrecht innerhalb der Heckklappe) in dem Kameramodulgehäuse 7 untergebracht. In Fig. 2 ist ein Zustand gezeigt, in welchem das Objektiv 13 der Kamera 12 bereits durch die Öffnung 9 des Kameramodulgehäuses 7 teilweise hervorragt. In Fig. 3 ist ein nächster Zustand gezeigt, in welchem das Objektiv 13 bereits vollständig außerhalb des Kameramodulgehäuses 7 angeordnet ist und ein Teil der Kamera 12 durch die Öffnung 9 des Kameramodulgehäuses 7 hervorragt. Die Kamera 12 hat sich insgesamt von ihrer Bewegung von Fig. 1 zu Fig. 3 derart gedreht, dass sie längs durch die Öffnung 9 bewegt wird. In Fig. 4 ist ein Zustand gezeigt, in welchem sich die Kamera 12 noch weiter in Richtung der Außenhaut 2 der Heckklappe 1 bewegt hat und somit das Objektiv 13 bereits freie Sicht auf einen Bereich hinter der Heckklappe 1 bzw. hinter dem Fahrzeug hat. Um eine bessere Sicht insbesondere auf den Bereich direkt hinter einer Stoßstange des Fahrzeugs oder sogar von oben auf die Stoßstange des Fahrzeugs zu erreichen, wird die Kamera 12, wie in Fig. 5 gezeigt ist, derart weiter nach außen bewegt, dass das Objektiv 13 durch die Öffnung in der Außenhaut 2 der Heckklappe 1 nach außen hervorragt und zusätzlich die Kamera 12 derart gedreht wird, dass der Sichtbereich 14 in Richtung der Stoßstange des Fahrzeugs erweitert wird, d.h. die Längsachse der Kamera wird steiler gestellt. In Fig. 5 ist der gesamte Bewegungsverlauf des Objektivs 13 als Bewegungsbahn 22 dargestellt. Die Kreuzmarkierungen entlang der Bewegungsbahn 22 zeigen die Momentaufnahmen der Fig. 1-5, d.h. das Kreuz ganz links bezeichnet die Position des Objektivs 13 in der Fig. 1, das nächste Kreuz bezeichnet die Position des Objektivs 13 in der Fig. 2 usw., bis schließlich das Kreuz ganz rechts auf der Bewegungsbahn 22 die Position des Objektivs 13 der Fig. 5 bezeichnet. Wie aus Fig. 5 ersichtlich ist, weist die Bewegungsbahn 22 einen S-förmigen Verlauf auf. Dadurch kann die Kamera 12 auf platzsparende Art und Weise von ihrer Ausgangsposition, wie sie in Fig. 1 gezeigt ist, in ihre Betriebsposition, wie sie in Fig. 5 gezeigt ist, überführt werden. Die Bewegung des Viergelenkscharniers kann beispielsweise mithilfe eines Elektromotors als Antriebseinheit in Verbindung mit einem Getriebe ausgeführt werden. Die Antriebseinheit kann beispielsweise eine Drehbewegung an dem ersten Drehgelenk 15 oder an dem zweiten Drehgelenk 17 ausführen. Die Bewegung in die in Fig. 5 gezeigte Aufnahmeposition wird somit dadurch erreicht, dass die Kamera mittels zweier rotatorischer Bewegungen mit einem Wendepunkt in eine ausreichend nach außen ragende Position gebracht wird. Im Vergleich mit nur einer rotatorischen Bewegung ermöglichen die zwei rotatorischen Bewegungen, dass es keine Einschränkung des Sichtbereichs sowohl im oberen als auch im unteren Bereich gibt, d.h. dass es insbesondere eine freie Sicht auf den Stoßfänger gibt.

Die Schutzklappe 10 kann über das Drehgelenk 11 derart bewegt werden, dass keine Geräusche durch Kontakt und Reibung zwischen der Schutzklappe 10 und der Kamera 12 entstehen. Darüber hinaus stellt die Klappe 10 einen Schutz gegen Staub, Spritzwasser und eine Manipulation der Kamera dar. Das Drehgelenk 11 der Schutzklappe 10 kann beispielsweise über einen Koppelmechanismus mit derselben Antriebseinheit betätigt werden, welche das Viergelenkscharnier antreibt.

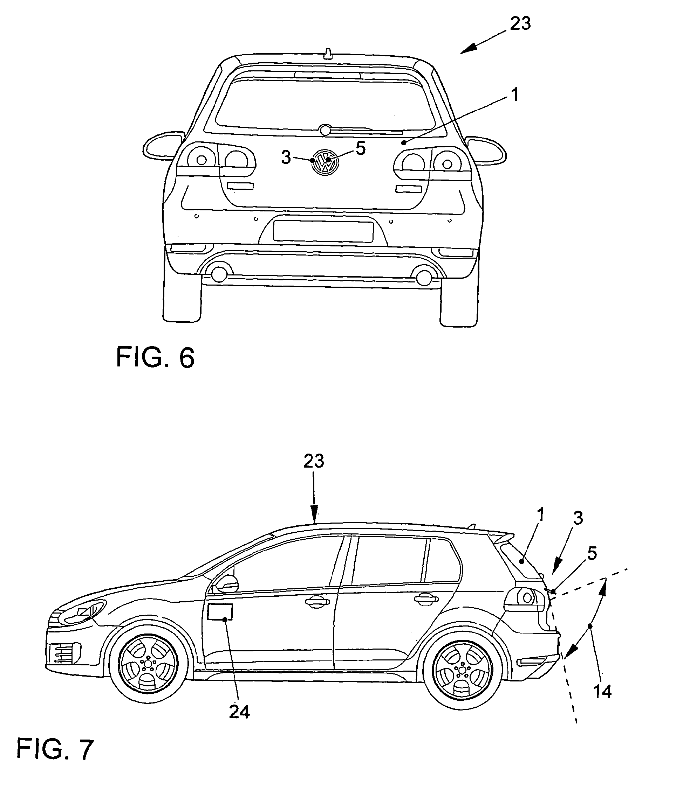

Fig. 6 zeigt ein Fahrzeug 23 mit einer Heckklappe 1, in welcher die in den Fig. 1-5 gezeigte Bedienvorrichtung 3 in einer Öffnung der Heckklappe 1 angeordnet ist. Der Bediengriff 5 ist in der in Fig. 6 gezeigten Ausführungsform als Fahrzeugemblem ausgebildet.

Fig. 7 zeigt das Fahrzeug 23 in einer Seitenansicht. Der Bediengriff 5 der Bedienvorrichtung 3 befindet sich in der betätigten Position, so dass unterhalb des Bediengriffs 5 die Kamera 12, wie in den Fig. 1-5 gezeigt wurde, herausgefahren werden kann, um den Bilderfassungsbereich 14 aufzunehmen. Das von der Kamera 12 aufgenommene Bild kann beispielsweise auf einer Anzeigeeinheit 24 des Fahrzeugs 23 dargestellt werden, so dass ein Fahrer des Fahrzeugs 23 beim Rückwärtsfahren, beispielsweise beim Parken oder Rangieren, eine visuelle Information über den Bereich 14 hinter dem Fahrzeug erhält.

Obwohl in der vorhergehenden Beschreibung der Schwenkmechanismus zum beweglichen Anbringen der Kamera 12 an der Heckklappe oder dem Kofferraumdeckel 1 als Viergelenkscharnier beschrieben wurde, ist die vorliegende Erfindung nicht darauf beschränkt, sondern umfasst auch Schwenkmechanismen mit Mehrgelenkschamieren mit mehr als vier Gelenken. Darüber hinaus ist die vorliegende Erfindung nicht darauf beschränkt, dass der Schwenkmechanismus in einer Heckklappe oder einem Kofferraumdeckel eines Fahrzeugs angebracht wird. Andere mögliche Anbringungsorte sind beispielsweise in einem vorderen Bereich des Fahrzeugs, beispielsweise einem Kühlergrill oder einem Kühlergriffemblem, oder in seitlichen Bereichen des Fahrzeugs, beispielsweise in einem Türgriff oder in einem Außenspiegel des Fahrzeugs.

## Patentansprüche

1. Bedienvorrichtung zum Öffnen eines Fahrzeugschlosses eines Fahrzeugs, umfassend:
- einen Bediengriff (5), welcher in einer Öffnung einer Außenhaut (2) einer Fahrzeugkarosserie (1) anbringbar ist, wobei der Bediengriff (5) zum Öffnen des Fahrzeugschlosses aus einer Ruheposition in eine betätigte Position bewegbar ist, wobei der Bediengriff (5) in der Ruheposition die Öffnung in der Außenhaut (2) im Wesentlichen verschließt und in der betätigten Position zumindest teilweise von der Außenhaut (2) hervorragt, und
- ein Kameramodul (7) umfassend einen Schwenkmechanismus und eine Kamera (12), wobei der Schwenkmechanismus umfasst:
- eine fahrzeugseitige Komponente (8), welche an dem Fahrzeug (1; 23) anbringbar ist,
- ein erstes Drehgelenk (15), welches an der fahrzeugseitigen Komponente (8) angebracht ist,
- einen ersten Schwenkarm (16) mit einem ersten Ende, einem zweiten Ende und einer ersten Länge, wobei das erste Ende an dem ersten Drehgelenk (15) drehbar gelagert ist,
- ein zweites Drehgelenk (17), welches in einem ersten Abstand zu dem ersten Drehgelenk (15) an der fahrzeugseitigen Komponente angebracht ist,
- einen zweiten Schwenkarm (18) mit einem ersten Ende, einem zweiten Ende und einer zweiten Länge, wobei das erste Ende an dem zweiten Drehgelenk (17) drehbar gelagert ist,
- einen Kamerahalter (19), an welchem die Kamera (12) angebracht ist,
- ein drittes Drehgelenk (20), welches an dem Kamerahalter (19) angebracht ist und an welchem das zweite Ende des ersten Schwenkarms (16) drehbar gelagert ist, und
- ein viertes Drehgelenk (21), welches in einem zweiten Abstand zu dem dritten Drehgelenk (20) an dem Kamerahalter (19) angebracht ist und an welchem das zweites Ende des zweiten Schwenkarms (18) drehbar gelagert ist,
wobei die fahrzeugseitige Komponente (8) ein Gehäuse mit einer Öffnung (9) umfasst, wobei der erste Abstand, der zweite Abstand, die erste Länge und die zweite Länge des Schwenkmechanismus derart dimensioniert sind, dass die Kamera (12) zwischen einer ersten Position und einer zweiten Position bezogen auf das Gehäuse (8) beweglich ist, wobei die Kamera (12) in der ersten Position im Inneren des Gehäuses (8) angeordnet ist, und wobei die Kamera (12) in der zweiten Position zumindest teilweise nach außen durch die Öffnung (9) des Gehäuses (8) hervorragt,
wobei das Kameramodul (7) in einem Innenbereich des Fahrzeugs (1; 23) innerhalb der Außenhaut (2) derart anbringbar ist, dass die Öffnung (9) des Gehäuses (8) und die Öffnung in der Außenhaut (2) einander derart gegenüber liegen, dass die Kamera (12) in der zweiten Position zumindest teilweise durch die Öffnung (9) des Gehäuses (8) und durch die Öffnung der Außenhaut (2) nach außen hervorragt.

2. Bedienvorrichtung nach Anspruch 1, wobei der erste Abstand und der zweite Abstand unterschiedlich sind und/oder die erste Länge und die zweite Länge unterschiedlich sind.

3. Bedienvorrichtung nach Anspruch 1 oder 2, wobei der erste Abstand, der zweite Abstand, die erste Länge und die zweite Länge derart dimensioniert sind,
dass der Kamerahalter (19) zwischen einer ersten Position und einer zweiten Position bezogen auf die fahrzeugseitige Komponente (8) beweglich ist, und
dass sich zumindest ein Bereich des Kamerahalters (19) bei einer Bewegung des Kamerahalters (19) zwischen der ersten Position und der zweiten Position bezogen auf die fahrzeugseitige Komponente entlang einer S-förmigen Bewegungsbahn (22) bewegt.

4. Bedienvorrichtung nach Anspruch 3, ferner umfassend eine Antriebseinheit, welche ausgestaltet ist, den Kamerahalter (19) zwischen der ersten und der zweiten Position zu bewegen.

5. Bedienvorrichtung nach einem der vorhergehenden Ansprüche, wobei der Bediengriff (5) mit der Bewegung der Kamera von der ersten Position in die zweite Position von der Ruheposition in die betätigte Position bewegt wird.

6. Fahrzeug umfassend:
- eine Karosserie (1) mit einer Außenhaut (2), in welcher eine Öffnung vorgesehen ist, und
- eine Bedienvorrichtung (3) nach einem der vorhergehenden Ansprüche, wobei der Bediengriff (5) der Bedienvorrichtung (3) in der Öffnung der Außenhaut (2) angebracht ist, und wobei das Kameramodul (7) der Bedienvorrichtung (3) in dem Innenbereich des Fahrzeugs (1; 23) derart gebracht ist, dass die Öffnung (9) des Gehäuses (8) und die Öffnung der Außenhaut (2) einander derart gegenüber liegen, dass die Kamera (12) in der zweiten Position zumindest teilweise durch die Öffnung (9) des Gehäuses (8) und durch die Öffnung der Außenhaut (2) nach außen hervorragt.

7. Fahrzeug nach Anspruch 6, wobei die Karosserie (1) eine Heckklappe oder einen Kofferraumdeckel des Fahrzeugs (23) umfasst, wobei die Bedienvorrichtung (3) zum Öffnen eines Schlosses für die Heckklappe oder den Kofferraumdeckel dient, wobei das Kameramodul (7) derart angebracht ist, dass bei geschlossener Heckklappe oder geschlossenem Kofferraumdeckel ein Objektiv (13) der Kamera (12) in der zweiten Position auf einen rückwärtigen Bodenbereich (14) hinter dem Fahrzeug (23) gerichtet ist.

## Claims

1. Operating device for opening a vehicle lock of a vehicle, comprising:
- an operating handle (5) that can be mounted in an opening of an exterior skin (2) of a vehicle body (1), wherein the operating handle (5) can be moved from a rest position into an actuated position in order to open the vehicle lock, wherein the operating handle (5), in the rest position, substantially closes the opening in the exterior skin (2) and, in the actuated position, projects at least partially from the exterior skin (2), and
- a camera module (7) comprising a pivoting mechanism and a camera (12),
wherein the pivoting mechanism comprises:
- a vehicle-side component (8) which can be attached to the vehicle (1; 23),
- a first rotary joint (15) which is attached to the vehicle-side component (8),
- a first pivot arm (16) having a first end, a second end and a first length, wherein the first end is rotatably mounted on the first rotary joint (15),
- a second rotary joint (17) which is attached to the vehicle-side component at a first distance from the first rotary joint (15),
- a second pivot arm (18) having a first end, a second end and a second length, wherein the first end is rotatably mounted on the second rotary joint (17),
- a camera holder (19) on which the camera (12) is mounted,
- a third rotary joint (20) which is attached to the camera holder (19) and on which the second end of the first pivot arm (16) is rotatably mounted, and
- a fourth rotary joint (21) which is attached to the camera holder (19) at a second distance from the third rotary joint (20) and on which the second end of the second pivot arm (18) is rotatably mounted,
wherein the vehicle-side component (8) comprises a housing with an opening (9), wherein the first distance, the second distance, the first length and the second length of the pivoting mechanism are dimensioned such that the camera (12) is movable between a first position and a second position in relation to the housing (8), wherein the camera (12), in the first position, is arranged in the interior of the housing (8), and wherein the camera (12), in the second position, projects at least partially outward through the opening (9) of the housing (8),
wherein the camera module (7) can be mounted in an interior region of the vehicle (1; 23) within the exterior skin (2) such that the opening (9) of the housing (8) and the opening in the exterior skin (2) are situated opposite one another such that the camera (12), in the second position, projects at least partially outward through the opening (9) of the housing (8) and through the opening in the exterior skin (2).

2. Operating device according to Claim 1, wherein the first distance and the second distance are different and/or the first length and the second length are different.

3. Operating device according to Claim 1 or 2, wherein the first distance, the second distance, the first length and the second length are dimensioned such that the camera holder (19) is movable between a first position and a second position in relation to the vehicle-side component (8), and
such that at least one region of the camera holder (19) moves along an S-shaped movement path (22) during a movement of the camera holder (19) between the first position and the second position in relation to the vehicle-side component.

4. Operating device according to Claim 3, also comprising a drive unit which is designed to move the camera holder (19) between the first and the second position.

5. Operating device according to one of the preceding claims, wherein the operating handle (5) is moved from the rest position into the actuated position with the movement of the camera from the first position into the second position.

6. Vehicle comprising:
- a body (1) with an exterior skin (2) in which an opening is provided, and
- an operating device (3) according to one of the preceding claims, wherein the operating handle (5) of the operating device (3) is mounted in the opening of the exterior skin (2), and wherein the camera module (7) of the operating device (3) is mounted in the interior region of the vehicle (1; 23) such that the opening (9) of the housing (8) and the opening of the exterior skin (2) are situated opposite one another such that the camera (12), in the second position, projects at least partially outward through the opening (9) of the housing (8) and through the opening of the exterior skin (2).

7. Vehicle according to Claim 6, wherein the body (1) comprises a tailgate or a luggage compartment cover of the vehicle (23), wherein the operating device (3) serves for the opening of a lock for the tailgate or the luggage compartment cover, wherein the camera module (7) is mounted such that, when the tailgate or luggage compartment cover is closed, an objective (13) of the camera (12), in the second position, is directed toward a rearward ground area (14) behind the vehicle (23) .

## Revendications

1. Dispositif de commande pour ouvrir une serrure de véhicule d'un vehicle, comprenant :
- une poignée de commande (5) qui peut être montée dans une ouverture d'une tôle extérieure (2) d'une carrosserie du véhicule (1), la poignée de commande (5), pour l'ouverture de la serrure du véhicule, pouvant être déplacée d'une position de repos dans une position activée, la poignée de commande (5), dans la position de repos, fermant essentiellement l'ouverture dans la tôle extérieure (2) et, dans la position activée, faisant saillie au moins en partie hors de la tôle extérieure (2), et
- un module de caméra (7) comprenant un mécanisme de pivotement et une caméra (12), le mécanisme de pivotement comprenant :
- un composant du côté du véhicule (8) qui peut être monté sur le véhicule (1 ; 23),
- une première articulation pivotante (15) qui est montée sur le composant (8) du côté du véhicule,
- un premier bras pivotant (16) avec une première extrémité, une deuxième extrémité et une première longueur, la première extrémité étant supportée de manière rotative sur la première articulation pivotante (15),
- une deuxième articulation pivotante (17) qui est montée à une première distance de la première articulation pivotante (15) sur le composant du côté du véhicule,
- un deuxième bras pivotant (18) avec une première extrémité, une deuxième extrémité et une deuxième longueur, la première extrémité étant supportée de manière rotative sur la deuxième articulation pivotante (17),
- un support de caméra (19) sur lequel est montée la caméra (12),
- une troisième articulation pivotante (20), qui est montée sur le support de caméra (19) et sur laquelle est supportée de manière rotative la deuxième extrémité du premier bras pivotant (16), et
- une quatrième articulation pivotante (21) qui est montée à une deuxième distance de la troisième articulation pivotante (20) sur le support de caméra (19) et sur laquelle est montée de manière rotative la deuxième extrémité du deuxième bras pivotant (18),
le composant (8) du côté du véhicule comprenant un boîtier avec une ouverture (9), la première distance, la deuxième distance, la première longueur et la deuxième longueur du mécanisme de pivotement étant dimensionnées de telle sorte que la caméra (12) puisse être déplacée entre une première position et une deuxième position par rapport au boîtier (8), la caméra (12), dans la première position, étant disposée à l'intérieur du boîtier (8) et la caméra (12), dans la deuxième position, dépassant au moins en partie vers l'extérieur à travers l'ouverture (9) du boîtier (8),
le module de caméra (7) pouvant être monté dans une région intérieure du véhicule (1 ; 23) à l'intérieur de la tôle extérieure (2) de telle sorte que l'ouverture (9) du boîtier (8) et l'ouverture dans la tôle extérieure (2) soient en regard l'une de l'autre, de telle sorte que la caméra (12), dans la deuxième position, fasse saillie vers l'extérieur au moins en partie à travers l'ouverture (9) du boîtier (8) et à travers l'ouverture de la tôle extérieure (2) .

2. Dispositif de commande selon la revendication 1, dans lequel la première distance et la deuxième distance sont différentes et/ou la première longueur et la deuxième longueur sont différentes.

3. Dispositif de commande selon la revendication 1 ou 2, dans lequel la première distance, la deuxième distance, la première longueur et la deuxième longueur sont dimensionnées de telle sorte que le support de caméra (19) puisse être déplacé entre une première position et une deuxième position par rapport au composant (8) du côté du véhicule, et
qu'au moins une région du support de caméra (19), lors d'un déplacement du support de caméra (19) entre la première position et la deuxième position, se déplace par rapport au composant du côté du véhicule le long d'une voie de déplacement en forme de S (22).

4. Dispositif de commande selon la revendication 3, comprenant en outre une unité d'entraînement qui est configurée pour déplacer le support de caméra (19) entre la première et la deuxième position.

5. Dispositif de commande selon l'une quelconque des revendications précédentes, dans lequel la poignée de commande (5) est déplacée de la position de repos dans la position activée avec le déplacement de la caméra de la première position dans la deuxième position.

6. Véhicule comprenant :
- une carrosserie (1) avec une tôle extérieure (2), dans laquelle est prévue une ouverture, et
- un dispositif de commande (3) selon l'une quelconque des revendications précédentes, dans lequel la poignée de commande (5) du dispositif de commande (3) est montée dans l'ouverture de la tôle extérieure (2), et le module de caméra (7) du dispositif de commande (3) étant monté dans la région intérieure du véhicule (1 ; 23) de telle sorte que l'ouverture (9) du boîtier (8) et l'ouverture de la tôle extérieure (2) soient en regard l'une de l'autre, de telle sorte que la caméra (12), dans la deuxième position, fasse saillie vers l'extérieur au moins en partie à travers l'ouverture (9) du boîtier (8) et à travers l'ouverture de la tôle extérieure (2).

7. Véhicule selon la revendication 6, dans lequel la carrosserie (1) comprend un hayon arrière ou un capot de coffre du véhicule (23), le dispositif de commande (3) servant à ouvrir une serrure pour le hayon arrière ou pour le capot de coffre, le module de caméra (7) étant monté de telle sorte que, lorsque le hayon arrière ou le capot de coffre est fermé, un objectif (13) de la caméra (12) soit orienté dans la deuxième position vers une région de fond arrière (14) derrière le véhicule (23).
